# EUROPÄISCHE PATENTANMELDUNG

(11) **EP 1 504 666 A1**
(43) Veröffentlichungstag der Anmeldung: **09.02.2005**
(21) Anmeldenummer: 04016771.0
(22) Anmeldetag: 15.07.2004
(51) Int. Cl.: A21B 1/40, F24C 7/08, A47J 37/08, G01N 21/25

(54) **Gargerät mit einer Bräunungssensorvorrichtung**

(30) Priorität: 06.08.2003 DE 10336115
(71) Anmelder: BSH Bosch und Siemens Hausgeräte GmbH, 81739 München (DE)
(72) Erfinder: Calis, Ursula, 80993 München (DE); Klemp, Eric, 83301 Traunreut (DE); Rogenhofer, Hans, 83607 Holzkirchen (DE); Schnell, Wolfgang, 83308 Trostberg (DE); Zeraschi, Monika, 83301 Traunreut (DE)

(57) **Zusammenfassung**

Die Erfindung geht aus von einem Gargerät mit einer Bräunungssensorvorrichtung (10), einer Elektronikeinheit (11) und einer Speichereinheit (14).

Um ein gattungsgemäßes Gargerät mit gesteigertem Bedienkomfort und gesteigerter Flexibilität in der Anwendung der Bräunungssensorvorrichtung bereitzustellen, wird vorgeschlagen, dass wenigstens ein Datensatz mit einem vorgegebenen Bräunungsgrad eines Garguts (15) mittels einer Eingabeeinheit (13) und der Elektronikeinheit (11) über zumindest zwei Gliederungsebenen (17, 18, 19 , 20) abrufbar ist.

## Beschreibung

Die Erfindung geht aus von einem Gargerät mit einer Bräunungssensorvorrichtung nach dem Oberbegriff des Anspruchs 1.

Aus der EP 0 682 243 A1 ist ein gattungsbildendes Gargerät mit einer Bräunungssensorvorrichtung bekannt. Das Gargerät weist eine Steuereinheit auf, über die eine Abschaltung erfolgen kann, sobald ein vorbestimmter Bräunungsgrad für ein bestimmtes Gargut erreicht wird. Ferner umfasst das Gargerät einen Speicher, in dem Messergebnisse abgelegt werden können.

Die Aufgabe der Erfindung besteht insbesondere darin, ein gattungsgemäßes Gargerät mit gesteigertem Bedienkomfort und gesteigerter Flexibilität in der Anwendung der Bräunungssensorvorrichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Gargerät mit einer Bräunungssensorvorrichtung, einer Elektronikeinheit und einer Speichereinheit.

Es wird vorgeschlagen, dass wenigstens ein Datensatz mit einem vorgegebenen Bräunungsgrad eines Garguts mittels einer Eingabeeinheit und einer Elektronikeinheit über zumindest zwei Gliederungsebenen abrufbar ist. Es können zahlreiche unterschiedliche Datensätze von einem Bediener übersichtlich und komfortabel abgerufen werden, wodurch der Bedienkomfort gesteigert werden kann. Die Bräunungssensorvorrichtung kann flexibel für zahlreich verschiedene Gargüter vorteilhaft eingesetzt werden, wodurch sich die erfindungsgemäße Lösung besonders für Haushaltsgargeräte eignet, mit denen im Allgemeinen zahlreich verschiedenes Gargut zubereitet wird.

Unter Elektronikeinheit sollen in diesem Zusammenhang insbesondere eine Recheneinheit, eine Steuereinheit und /oder eine Regeleinheit verstanden werden.

Der Begriff "Bräunungsgrad" wird nachfolgend allgemein derart verstanden, dass hierunter eine Veränderung der Oberflächenfärbung erfasst wird, die sich von anfangs ganz hell bis später zu dunkleren Werten hin verändert. Eine weiße Fläche würde dabei einen Bräunungsgrad von 0 und eine schwarze Fläche würde dabei einen Bräunungsgrad von 1 aufweisen.

Unter Bräunungssensorvorrichtung soll in diesem Zusammenhang eine Vorrichtung verstanden werden, mittels der ein für die Bräunung des Garguts repräsentativer Wert ermittelt werden kann, und zwar insbesondere eine Vorrichtung zur Messung des Bräunungsgrads eines Garguts, insbesondere zur Messung des Bräunungsgrads eines Backguts, bei einer Wärmebehandlung in einem Garraum, mit mindestens einer Strahlungsquelle, die eine Messstrahlung und eine Referenzstrahlung unterschiedlicher Wellenlängenbereiche erzeugt, die beide über eine von einem Hohlspiegel gebildete Koppeleinheit auf das Gargut abgestrahlt werden, mit einem Messsensor zur Erfassung der vom Gargut reflektierten, rückgestreuten Strahlung, mit einem Referenzsensor zur Erfassung der Intensität der Messstrahlung und der Referenzstrahlung, und mit einer Einrichtung zur Ermittlung des Bräunungsgrads aus der vom Messsensor detektierten Intensität der Messstrahlung, aus der vom Messsensor detektierten Intensität der Referenzstrahlung, aus der vom Referenzsensor detektierten Intensität der Messstrahlung und aus der vom Referenzsensor detektierten Intensität der Referenzstrahlung, wie diese in der Druckschrift EP 0 682 243 A1 beschrieben ist. Die Druckschrift EP 0 682 243 A1 soll in ihrem gesamten Umfang und insbesondere im Hinblick auf den Aufbau der Bräunungssensorvorrichtung und dem Verfahren zur Ermittlung des Bräunungsgrads als zur Lehre der vorliegenden Erfindung gehörig anzusehen sein.

Unter Gargerät sollen sämtliche Geräte verstanden werden, bei denen der Fachmann eine Anwendung der erfindungsgemäßen Lösung als sinnvoll erachtet, wie insbesondere Backöfen, Mikrowellenherde, Brotröster, Toaster usw. bzw. alle Geräte, die den Zustand des Garguts durch thermisches Einwirken verändern. Ferner soll unter einer Ausgabeeinheit in diesem Zusammenhang insbesondere eine visuelle und/oder eine akustische Ausgabeeinheit verstanden werden, wie Bildschirme, Lautsprecher usw.

Der Datensatz ist vorteilhaft mittels der Elektronikeinheit zur zumindest teilautomatisierten Betätigung bzw. Steuerung und/oder Regelung eines Verbrauchermittels, insbesondere eines Heizelements nutzbar, wodurch eine manuelle Einstellung, Steuerung und/oder Regelung zumindest reduziert und der Komfort weiter gesteigert werden kann. Alternativ oder zusätzlich kann die Speichereinheit als elektronisches Kochbuch für einen Bediener genutzt werden, indem z.B. Zubereitungsanweisungen mit Angaben eines bestimmten Bräunungsgrads gespeichert sind usw. Eine Steuereinheit und/oder Regeleinheit zur Betätigung des Verbrauchermittels kann dabei zumindest teilweise einstückig mit der Elektronikeinheit ausgeführt sein oder kann von einer separaten Einheit gebildet sein.

Ferner wird vorgeschlagen, dass mittels der Eingabeeinheit und mittels der Elektronikeinheit wenigstens ein Datensatz mit einem Bräunungsgrad in die Speichereinheit, vorzugsweise zumindest zwei Gliederungsebenen zugeordnet, eingebbar ist. Es kann ein individueller Datenbestand aufgebaut werden, der sowohl zum zumindest teilautomatisiert als auch zum rein manuell gesteuerten bzw. geregelten Garen genutzt werden kann.

Mittels der Eingabeeinheiten können verschiedene, dem Fachmann als sinnvoll erscheinende Eingabeformen realisiert sein, beispielsweise kann eine Eingabe über Sprache, über eine Tastatur, über eine Schaltwippe, über einen Berührschalter, wie über einen Touchscreen, und/oder über eine Leseeinheit, mittels der beispielsweise Codes von speziellen Chipkarten und/oder Verpackungen von Fertigmenüs eingelesen werden können, usw. realisiert sein. Zudem könnte das Gargerät mit einer Datenschnittstelle zum Datenaustausch verbunden sein, beispielsweise mit einer Mobilfunkschnittstelle, einer hausinternen Schnittstelle und/oder einer Internetschnittstelle usw.

Ferner kann der Komfort gesteigert werden, indem dem eingegebenen Datensatz ein zumindest in Grenzen frei wählbarer Namen zuordenbar ist, so dass jeder Bediener für ihn individuell einprägsame Namen vergeben kann.

Weiter wird vorgeschlagen, dass mittels der Elektronikeinheit wenigstens ein Bräunungsgrad, und zwar ein zuvor in einer Speichereinheit abgespeicherter und/oder insbesondere ein aktuell sensierter Bräunungsgrad einer Ausgabeeinheit zur Ausgabe an einen Bediener zuführbar ist. Ein vorliegender Bräunungsgrad kann stets aktuell von einem Bediener einfach und schnell für zahlreich unterschiedliche Gargüter abgelesen, die Anwendung des Gargeräts kann vereinfacht und der Bedienkomfort kann gesteigert werden.

In einer weiteren Ausgestaltung der Erfindung wird vorgeschlagen, dass insbesondere von einem Gargerätbediener mittels der Eingabeeinheit und mittels der Elektronikeinheit ein in der Speichereinheit gespeicherter, insbesondere auf ein spezielles Gargut bezogener Bräunungsgrad veränderbar ist. Es kann komfortabel ein gewünschter Bräunungsgrad erzielt bzw. kann dieser auf individuelle Wünsche angepasst werden. Ist der gespeicherte, vorgegebene Bräunungsgrad erreicht, jedoch noch nicht der individuell gewünschte Bräunungsgrad, kann einfach nachgeregelt werden. Der gespeicherte Bräunungsgrad kann dabei vorübergehend und/oder dauerhaft und kann vor, während und/oder nach einem Garprozess veränderbar ausgeführt sein.

Weiter wird vorgeschlagen, dass mittels der Elektronikeinheit abhängig von dem sensierten Bräunungsgrad und einem vorgegebenen Bräunungsgrad eine verbleibende Garzeit berechenbar ist, wodurch der Bedienkomfort weiter gesteigert werden kann, und zwar insbesondere, wenn diese zur Ausgabe einer Ausgabeeinheit zuführbar ist. Neben einer wichtigen Information für den Bediener können auch abhängig von der verbleibenden Garzeit verschiedene Steuerabläufe und/oder Regelabläufe aktiviert werden, beispielsweise können abhängig von der verbleibenden Garzeit verschiedene Heizelemente zu-, abgeschaltet und/oder in ihrer Leistungsaufnahme verändert werden. Die verbleibende Garzeit wird dabei vorteilhaft mit empirisch ermittelten Werten, abhängig von verschiedenen, dem Fachmann als sinnvoll erscheinenden Betriebsparametern berechnet, wie abhängig vom Gargut, gewählter Temperatur und/oder gewählter Garart usw.

Ferner wird vorgeschlagen, dass das Gargerät eine Sensoreinheit aufweist, mittels der eine Kenngröße für eine Einschubhöhe eines Garguts sensierbar ist. Die sensierte Einschubhöhe kann vorteilhaft bei weiteren Steuerungs-, Regelungs- und/oder Rechenvorgängen berücksichtigt werden, wie insbesondere bei der Berechnung bzw. bei der Bestimmung einer verbleibenden Garzeit, ausgehend von einem Ist-Bräunungszustand bis zu einem Soll-Bräunungszustand. Der Bedienkomfort kann weiter gesteigert werden, und zwar insbesondere, wenn die sensierte Einschubhöhe der Ausgabeeinheit zur Ausgabe zuführbar ist. Ferner können Fehlbedienungen frühzeitig erkannt und in einer weiteren Steuerung und/oder Regelung berücksichtigt und kompensiert werden, und zwar insbesondere, wenn über die Elektronikeinheit die sensierte Kenngröße für die Einschubhöhe mit einer vorgegebenen Kenngröße vergleichbar ist.

Ist die Sensoreinheit zur Sensierung der Einschubhöhe zumindest teilweise einstückig mit der Bräunungssensorvorrichtung ausgeführt, können zusätzliche Bauteile, Montageaufwand und Kosten eingespart werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Backofen von vorn und
- Fig. 2: eine schematisierte Darstellung des Backofens aus Fig. 1.

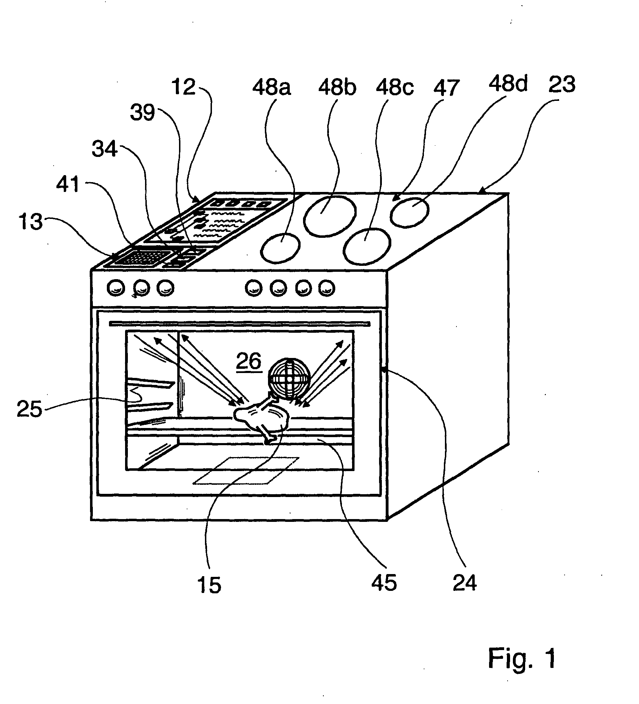

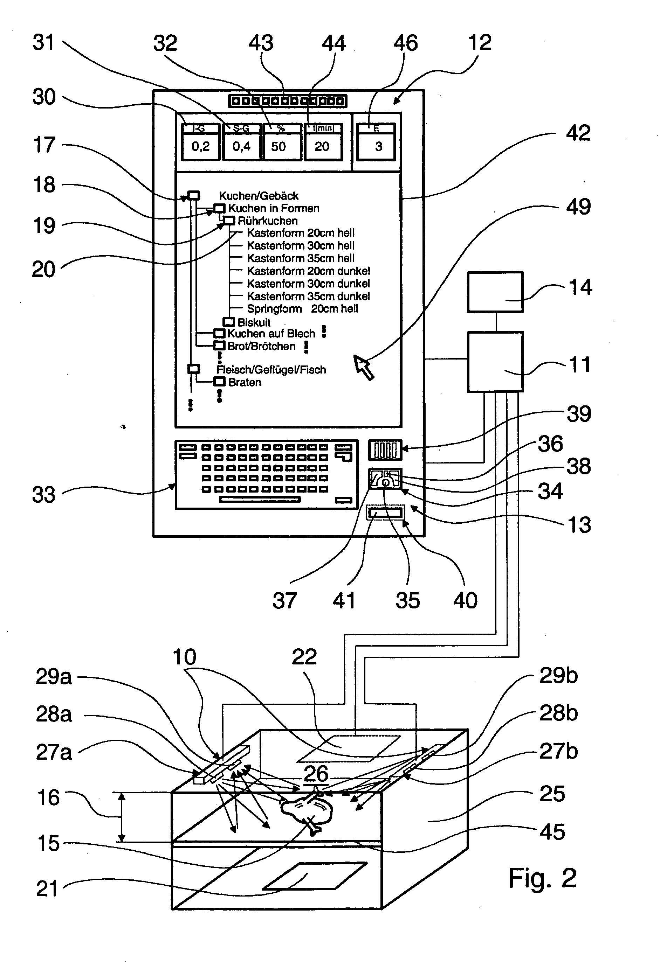

Fig. 1 zeigt einen Haushaltsbackofen von vorn mit einem in einem Backofengehäuse 23 angeordneten und von einer Backofentür 24 und einer Muffel 25 begrenzten Garraum 26. An einer Deckseite des Haushaltsbackofens ist eine Kochmulde 47 mit vier Kochstellen 48a, 48b, 48c, 48d und seitlich neben der Kochmulde 47 sind eine Eingabeeinheit 13 und eine Ausgabeeinheit 12 angeordnet. Grundsätzlich könnte die Eingabeeinheit 13 und die Ausgabeeinheit 12 auch an einer Frontseite des Haushaltsbackofens angeordnet sein. Die Eingabeeinheit 13 weist eine Tastatur 33, eine Bildschirmzeigersteuervorrichtung 34 mit einer drehbar gelagerten Kugel 35, einem drehbar gelagerten Stellrad 36 und zwei Tasten 37, 38, ein Mikrofon 39 zur Spracheingabe und eine Chipkartenleseeinheit 40 mit einem Aufnahmeschlitz 41 auf (Fig. 2). Die Ausgabeeinheit 12 umfasst einen Bildschirm 42 zur visuellen Ausgabe und einen Lautsprecher 43 zur akustischen Ausgabe von Informationen, wie insbesondere zur Ausgabe von akustischen Warnsignalen und zur sprachunterstützten Menüführung.

Der Haushaltsbackofen umfasst zudem eine Bräunungssensorvorrichtung 10, die zwei Einheiten 27a, 27b mit jeweils einer Sendereinheit 28a, 28b und einer Empfängereinheit 29a, 29b aufweist. Die Einheiten 27a, 27b sind in seitlich oberen Eckbereichen des Garraums 26 angeordnet. Im Hinblick auf eine genauere Beschreibung der Bräunungssensorvorrichtung 10 darf auf die Druckschrift EP 0 682 243 A1 verwiesen werden. Ferner umfasst der Haushaltsbackofen eine Elektronikeinheit 11 und eine Speichereinheit 14.

Mittels der Eingabeeinheit 13 und mittels der Elektronikeinheit 11 sind Datensätze für spezielle Gargüter über z.B. vier Gliederungsebenen 17, 18, 19, 20 abrufbar. In der ersten Gliederungsebene 17 sind beispielsweise die Hauptgruppen "Kuchen/Gebäck", "Fleisch, Geflügel, Fisch" usw. aufgeführt. In der zweiten Gliederungsebene 18 ist die Hauptgruppe "Kuchen/Gebäck" beispielsweise weiter unterteilt in die ersten Untergruppen "Kuchen in Formen", "Kuchen auf Blech", "Brot/Brötchen" usw. In der dritten Gliederungsebene 19 ist die erste Untergruppe "Kuchen in Formen" weiter in zweite Untergruppen "Rührkuchen", "Biskuit" usw. unterteilt. Die zweite Untergruppe "Rührkuchen" ist dann im Hinblick auf eine Formgröße und einen gewünschten, qualitativ mit "dunkel", "hell" angegebenen Bräunungsgrad in dritte Untergruppen unterteilt.

Durch Anfahren einer der Hauptgruppen, einer der ersten Untergruppe oder einer der zweiten Untergruppe mit einem Bildschirmzeiger 49 mittels der Bildschirmzeigersteuervorrichtung 34 und durch anschließendes Doppelklicken auf die der Tastatur 33 zugewandten Taste 37 kann jeweils in die nächst tiefere Gliederungsebene 18, 19, 20 gesprungen werden.

Wird eine dritte Untergruppe mittels der Bildschirmzeigersteuervorrichtung 34 angefahren und durch Doppelklicken auf die Taste 37 ausgewählt, werden für das dadurch ausgewählte Gargut relevante Informationen auf dem Bildschirm 42 angezeigt, wie beispielsweise Zubereitungsanweisungen, voraussichtliche Garzeit, quantitativer Bräunungsgrad zwischen 0 und 1, eine empfohlene Garart und/oder eine empfohlene Einschubhöhe usw.

Ferner wird einem Bediener zur Auswahl gestellt, ob ein Garprogramm für das ausgewählte Gargut 15 gestartet werden soll, gemäß dem abhängig von im Datensatz hinterlegten Daten vollautomatisiert von Heizmitteln gebildete Verbrauchermittel 21, 22 angesteuert werden, oder ob die Verbrauchermittel 21, 22 in einem nachfolgenden Garprozess manuell angesteuert werden sollen.

Wird das Garprogramm gestartet, wird mittels der Elektronikeinheit 11, die zudem eine Steuer- und Regeleinheit der Verbrauchermittel 21, 22 umfasst, ein sensierter Bräunungsgrad des Garguts 15 der Ausgabeeinheit 12 zur Ausgabe an den Bediener des Haushaltsbackofens zugeführt. Der sensierte Bräunungsgrad wird im Betrieb über ein erstes Anzeigefeld 30 ausgegeben, wobei eine weiße Fläche einen Bräunungsgrad von 0 und eine schwarze Fläche einen Bräunungsgrad von 1 aufweisen würde. Ferner ist mittels der Elektronikeinheit 11, die eine Recheneinheit umfasst, der sensierte Bräunungsgrad mit dem in der Speichereinheit 14 für das spezielle Gargut 15 vorgegebenen und in einem zweiten Anzeigefeld 31 ausgegebenen Bräunungsgrad vergleichbar und eine Kenngröße für einen relativen Bräunungsgrad berechenbar, die in einem dritten Anzeigefeld 32 ausgegeben wird. Anstatt dass der sensierte Bräunungsgrad mit dem in der Speichereinheit 14 bereits seit längerer Zeit für das spezielle Gargut 15 gespeicherten Bräunungsgrad verglichen wird, kann der sensierte Bräunungsgrad auch mit einem aktuell vom Bediener eingegebenen Bräunungsgrad verglichen werden.

Weiter ist mittels der Elektronikeinheit 11 abhängig von dem sensierten Bräunungsgrad und dem vorgegebenen Bräunungsgrad eine verbleibende Garzeit in Minuten berechenbar, die mittels der Elektronikeinheit 11 der Ausgabeeinheit 12 zur visuellen Ausgabe an den Bediener zuführbar ist und im Betrieb in einem vierten Anzeigefeld 44 zur Anzeige gebracht wird. Bei der Berechnung bzw. bei der Bestimmung der Garzeit werden empirisch ermittelte und in der Speichereinheit 14 abgelegte Daten genutzt. Dabei werden insbesondere eine gewählte Garart, d.h. Oberhitze, Unterhitze, Umluft, Grillbetrieb, eine vorliegende Temperatur sowie eine vorliegende Einschubhöhe 16 berücksichtigt.

Eine Kenngröße für die vorliegende Einschubhöhe 16 wird dabei mittels einer mit der Bräunungssensorvorrichtung 10 einstückig ausgeführten Sensoreinheit sensiert. Dabei werden von den Sendereinheiten 28a, 28b auf ein Backblech 45 bzw. auf einen Backrost gesendete und an die Empfängereinheiten 29a, 29b reflektierte Strahlungen zuerst als am Backblech 45 reflektierte Strahlen identifiziert und anschließend daraufhin ausgewertet, in welcher Entfernung das Backblech 45 angeordnet ist, um anschließend auf die vorliegende Einschubhöhe 16 schließen zu können. Die vorliegende Entfernung kann beispielsweise über eine Laufzeitermittlung oder über sonst eine dem Fachmann als sinnvoll erscheinende Auswertung erfolgen. Die Identifizierung der am Backblech 45 reflektierten Strahlung kann beispielsweise anhand einer bestimmten Intensität der Strahlung festgemacht werden. Das Backblech 45 weist stets eine zumindest im Wesentlichen gleichbleibende Farbe und somit auch einen gleichbleibenden "Bräunungsgrad" auf.

Die sensierte Einschubhöhe 16 wird mittels der Elektronikeinheit 11 mit einer vorgegebenen, in der Speichereinheit 14 gespeicherten Einschubhöhe verglichen. Weicht die sensierte Einschubhöhe 16 von der gespeicherten Einschubhöhe ab, liegt jedoch in einem akzeptablen Bereich, wird eine Differenz zwischen der sensierten, tatsächlich vorliegenden Einschubhöhe 16 und der gespeicherten Einschubhöhe durch entsprechendes Ansteuern der Verbrauchermittel 21, 22 ausgeglichen. Liegt die sensierte Einschubhöhe 16 in einem inakzeptablen Bereich, wird dies dem Bediener durch ein Warnsignal über den Lautsprecher 43 und/oder über den Bildschirm 42 mitgeteilt. Die sensierte Einschubhöhe 16 wird dem Bediener durch Angabe einer Einschubebene in einem fünften Anzeigefeld 46 mitgeteilt.

Entspricht der sensierte Bräunungsgrad dem vorgegebenen Bräunungsgrad, wird abhängig von einem Einstellzustand des Haushaltsbackofens entweder ein akustisches Signal über den Lautsprecher 43 und ein visuelles Signal über den Bildschirm 42 ausgegeben, der Garprozess automatisch unterbrochen und/oder die Backofentür 24 geöffnet. Ferner sind auch weitere, zumindest teilautomatisierte Vorgänge denkbar, die bei Erreichen des vorgegebenen Bräunungsgrads ausgelöst werden.

Der in der Speichereinheit 14 abgespeicherte Bräunungsgrad kann vom Bediener mittels der Eingabeeinheit 13 und mittels der Elektronikeinheit 11 verändert werden, beispielsweise, wenn bei Erreichen eines vorgegebenen Bräunungsgrads das Gargut 15 nicht die individuell gewünschte Bräune aufweist und die Garzeit für ein entsprechendes Gargut 15 grundsätzlich länger bemessen werden soll.

Ferner können mittels der Eingabeeinheit 13 und mittels der Elektronikeinheit 11 Datensätze in die Speichereinheit 14 einer oder mehrerer Gliederungsebenen 17, 18, 19, 20 zugeordnet eingegeben werden, wobei den Datensätzen frei wählbare Namen zugeordnet werden können. Die Datensätze können durch den Bediener auf unterschiedliche Weise in die Speichereinheit 14 abrufbar eingegeben werden, und zwar können diese über einen Lernmodus aufgenommen werden, indem ein durchgeführter, manuell gesteuerter Garprozess gespeichert wird, oder die Datensätze können über die Tastatur 33, sprachgesteuert über das Mikrofon und/oder über die Chipkartenleseeinheit 40, indem in den Aufnahmeschlitz 41 der Chipkartenleseeinheit 40 entsprechende Chipkarten eingesteckt werden, eingegeben werden.

### Bezugszeichen

- 10: Bräunungssensorvorrichtung
- 11: Elektronikeinheit
- 12: Ausgabeeinheit
- 13: Eingabeeinheit
- 14: Speichereinheit
- 15: Gargut
- 16: Einschubhöhe
- 17: Gliederungsebene
- 18: Gliederungsebene
- 19: Gliederungsebene
- 20: Gliederungsebene
- 21: Verbrauchermittel
- 22: Verbrauchermittel
- 23: Backofengehäuse
- 24: Backofentür
- 25: Muffel
- 26: Garraum
- 27: Einheit
- 28: Sendereinheit
- 29: Empfängereinheit
- 30: Anzeigefeld
- 31: Anzeigefeld
- 32: Anzeigefeld
- 33: Tastatur
- 34: Bildschirmzeigersteuervorrichtung
- 35: Kugel
- 36: Stellrad
- 37: Taste
- 38: Taste
- 39: Mikrofon
- 40: Chipkartenleseeinheit
- 41: Aufnahmeschlitz
- 42: Bildschirm
- 43: Lautsprecher
- 44: Anzeigefeld
- 45: Backblech
- 46: Anzeigefeld
- 47: Kochmulde
- 48: Kochstelle
- 49: Bildschirmzeiger

## Patentansprüche

1. Gargerät mit einer Bräunungssensorvorrichtung (10), einer Elektronikeinheit (11) und einer Speichereinheit (14), **dadurch gekennzeichnet, dass** wenigstens ein Datensatz mit einem vorgegebenen Bräunungsgrad eines Garguts (15) mittels einer Eingabeeinheit (13) und der Elektronikeinheit (11) über zumindest zwei Gliederungsebenen (17, 18, 19, 20) abrufbar ist.

2. Gargerät nach Anspruch 1, **dadurch gekennzeichnet, dass** der abgerufene Datensatz mittels der Elektronikeinheit (11) zur zumindest teilautomatisierten Betätigung eines Verbrauchermittels (21, 22) nutzbar ist.

3. Gargerät nach Anspruch 1 oder 2, **dadurch gekennzeichnet, dass** mittels der Eingabeeinheit (13) und mittels der Elektronikeinheit (11) wenigstens ein Datensatz mit einem Bräunungsgrad in die Speichereinheit (14) eingebbar ist.

4. Gargerät nach Anspruch 3, **dadurch gekennzeichnet, dass** mittels der Eingabeeinheit (13) und mittels der Elektronikeinheit (11) wenigstens ein Datensatz in die Speichereinheit (14) zumindest zwei Gliederungsebenen (17, 18, 19, 20) zugeordnet eingebbar ist.

5. Gargerät nach Anspruch 3 oder 4, **dadurch gekennzeichnet, dass** dem eingegebenen Datensatz ein zumindest in Grenzen frei wählbarer Name zuordenbar ist.

6. Gargerät nach einem der vorhergehenden Ansprüche, **dadurch gekennzeichnet, dass** mittels der Elektronikeinheit (11) wenigstens ein Bräunungsgrad einer Ausgabeeinheit (12) zur Ausgabe an einen Bediener zuführbar ist.

7. Gargerät nach einem der vorhergehenden Ansprüche, **dadurch gekennzeichnet, dass** mittels der Eingabeeinheit (13) und mittel der Elektronikeinheit (11) ein in der Speichereinheit (14) gespeicherter Bräunungsgrad veränderbar ist.

8. Gargerät nach einem der vorhergehenden Ansprüche, **dadurch gekennzeichnet, dass** mittels der Elektronikeinheit (11) abhängig von dem sensierten Bräunungsgrad und einem vorgegebenen Bräunungsgrad eine verbleibende Garzeit berechenbar ist.

9. Gargerät nach einem der vorhergehenden Ansprüche, **gekennzeichnet durch** eine Sensoreinheit, mittels der eine Kenngröße für eine Einschubhöhe (16) eines Garguts (15) sensierbar ist.

10. Gargerät nach Anspruch 9, **dadurch gekennzeichnet, dass** die Sensoreinheit zumindest teilweise einstückig mit der Bräunungssensorvorrichtung (10) ausgeführt ist.

11. Gargerät nach einem der vorhergehenden Ansprüche, **gekennzeichnet durch** die Ausbildung als Haushaltsgerät.
